# EUROPÄISCHE PATENTSCHRIFT

(11) **EP 0 416 524 B1**
(45) Veröffentlichungstag und Bekanntmachung des Hinweises auf die Patenterteilung: **11.08.1993**
(21) Anmeldenummer: 90116945.8
(22) Anmeldetag: 04.09.1990
(51) Int. Cl.: B23Q 3/155, G01B 21/04

(54) **Einrichtung zum Wechseln von Taststiften für Messeinrichtungen**
Device for the change of calipers for measuring devices
Dispositif pour le changement de palpeurs pour dispositifs de mesure

(30) Priorität: 06.09.1989 DE 3929602
(43) Veröffentlichungstag der Anmeldung: 13.03.1991
(73) Patentinhaber: Mauser-Werke Oberndorf GmbH, D-78727 Oberndorf (DE)
(72) Erfinder: Mayer, Manfred, D-7230 Schramberg (DE); Gruhler, Siegfried, D-7243 Vöhringen 2 (DE); Schwind, Erhard, D-7238 Oberndorf (DE); Band, Gerhard, D-7238 Oberndorf (DE); Krakowski, Klaus, D-7298 Lossburg-Wittendorf (DE)
(74) Vertreter: Hofmann, Gerhard, Dipl.-Ing. Patentassessor

(56) Entgegenhaltungen:
- WO-A-89/05210
- CH-A- 544 616
- US-A- 4 688 307

## Beschreibung

Die Erfindung betrifft eine Einrichtung zum Wechseln von Taststiften für Meßeinrichtungen gemäß dem Oberbegriff von Patentanspruch 1.

Voraussetzung für eine solche Einrichtung zum Wechseln von Taststiften ist es, daß die Taststifte eine Taststiftaufnahmeeinrichtung beispielsweise ähnlich der Ausführung nach der DE-A-33 20 127 besitzen, wodurch der Taststift durch eine elektrisch arbeitende Spanneinrichtung in eine eindeutige Lage in der Aufnahme eines Tastkopfes gezogen wird. Die Betätigung der elektromagnetischen Spanneinrichtung oder einer anderen bekannten Spanneinrichtung kann automatisch durch den Rechner erfolgen, der die Bahnsteuerung der Meßmaschine über die Meßwertübernahme durchführt. Dadurch wird der Tastkopf der Meßmaschine zu einem in ihrem Meßbereich aufgebauten Magazin verfahren, in dem verschiedene Taststifte oder Taststiftkombinationen bereitgehalten werden.

Es ist Aufgabe der Erfindung, eine Einrichtung der eingangs genannten Art zu schaffen, welche ein automatisches Wechseln von Taststiften für Meßeinrichtungen gewährleistet.

Diese Aufgabe wird erfindungsgemäß durch den Kennzeichenteil von Patentanspruch 1 gelöst. Erfinderische Ausgestaltungen und Weiterbildungen des Lösungsgedankens sind den Unteransprüchen 2 bis 13 zu entnehmen.

Durch die erfinderischen Merkmale ist es, bei einer Einrichtung zum Wechseln von Taststiften für Meßeinrichtungen möglich, einen automatischen Wechsel mit kurzen Wechselzeiten bei beliebiger Anordnung der Wechselplätze innerhalb des Meßraumes einer Meßeinrichtung durchzuführen. Da mit der Schutzdeckelöffnung der Programmzyklus des Wechselns, nämlich einen Taststift ablegen oder aufnehmen, nur für einen angewählten Wechselplatz aktiviert wird, ist eine einfache Erkennung der zu wechselnden Taststiftaufnahmeeinrichtung möglich. Auch ein feinmanuelles Verdrehen der Taststiftaufnahmeeinrichtung innerhalb der Spannzangen wird verhindert, da zur radialen Ausrichtung ein Indexstift in eine Nut der Taststiftaufnahmeeinrichtung eingreift. Bei Fehlbedienungen oder Störungen wird bei dieser Einrichtung automatisch eine Kollision des Tastkopfes erkannt und die Meßmaschine bzw. die Meßeinrichtung stillgesetzt. Die Wechselplätze können entsprechend den Meßanforderungen an jeden beliebigen Platz innerhalb des Meßbereiches eingerichtet werden. Die Taststiftaufnahmeeinrichtung kann innerhalb der Wechselplätze horizontal oder auch vertikal abgelegt werden. Das Einrichten der Wechselplätze wird programmgemäß mit einer Koordinaten-Meßeinrichtung unterstützt, so daß die exakten Wechselpositionen in CNC-Steuerungsverfahren störungsfrei möglich sind. Schließlich können Tastköpfe mit langen Taststiften und aus sternförmig angeordneten Taststiften problemlos eingesetzt werden, weil für solche Taststifte ein besonderer Raum innerhalb des Meßbereiches der Meßeinrichtung vorgesehen werden kann.

In der Zeichnung sind Beispiele der Erfindung dargestellt. Es zeigen:
- Figur 1: einen Wechselplatz eines Magazins für Taststifte im Längsschnitt
- Figur 2: eine Draufsicht auf einen Wechselplatz gemäß der Pfeilrichtung II
- Figur 3: die Spannzange eines Wechselplatzes in der Draufsicht entsprechend der Linie III-III in Figur 1
- Figur 4: eine Spannzange eines Wechselplatzes anderer Bauart mit einem Hubmagneten in der Draufsicht
- Figur 5: eine Draufsicht auf einen Schutzdeckel
- Figur 6: die Federn der Lagerung einer Spannzange gemäß der Linie VI-VI in Figur 5
- Figur 7: eine Meßmaschine mit schematisch dargestellten Wechselmagazinen.

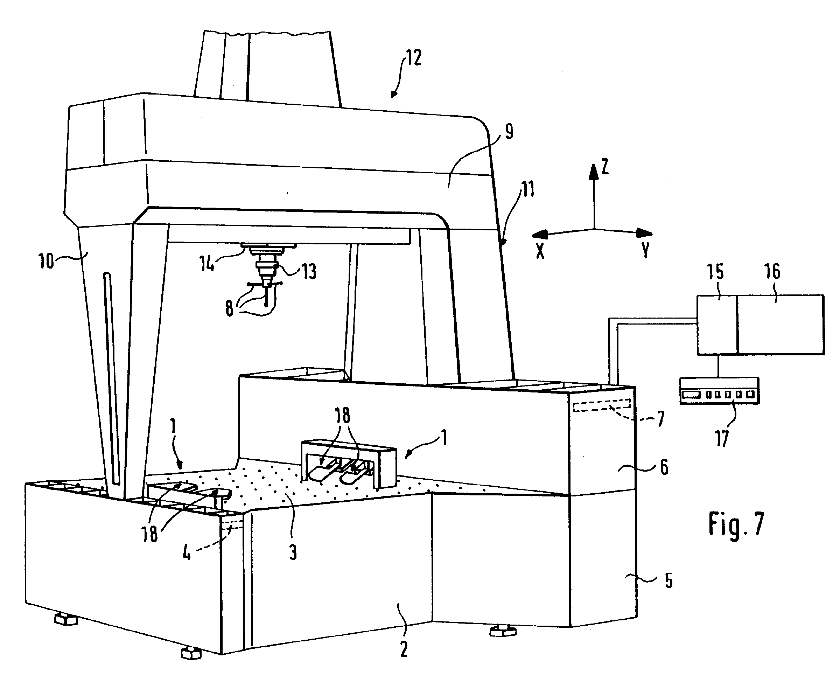

Die Einrichtung 1 zum Wechsel von Taststiften 8 für Meßeinrichtungen wird zunächst anhand der Figur 7 erläutert.

In Figur 7 ist als eine Meßeinrichtung eine Koordinatenmeßmaschine 12 in Portalbauweise dargestellt, die im wesentlichen aus einem Grundgestell 2 mit einer Meßtischplatte 3 und einer Führung 4 im vorderen Meßbereich besteht. Die Rückseite des Grundgestells wird durch einen kastenförmigen Träger 5 gebildet, der sich mit einem aufgesetzten Formteil über die Meßtischplatte 3 erhebt. Im oberen Formteil 6 befindet sich wiederum eine Führung 7. Quer über der Meßtischplatte 3 befindet sich ein in Kastenbauweise ausgeführter Querträger 9, der wiederum mit Führungen für einen Meßschlitten 14 versehen ist. Der symmetrisch aufgebaute Querträger 9 ruht auf einem vorderen Abstützarm 10 sowie einem hinteren Abstützarm 11. Die Steuerung einer solchen Koordinatenmeßmaschine 12 erfolgt von einer Steuerungseinheit 15, einer Datenstation 16 und einem Bedienpult 17, die mit der Koordinatenmeßmaschine 12 in Wirkverbindung stehen.

An dem Meßschlitten 14 der Koordinatenmeßmaschine 12 ist ein Tastkopf 13 befestigt, welcher in dem dargestellten Beispiel einen sternförmigen Taststift 8 trägt. Die Einrichtungen 1 zum Wechseln von Taststiften 8 beliebiger Ausführung befinden sich im Verfahrbereich des Tastkopfes 13 der Meßeinrichtung 12 auf der Meßtischplatte 3. Sie sind in dem gezeigten Beispiel an den Y-Längsseiten im äußeren Verfahrbereich des Tastkopfes 13 angeordnet. Statt dieser gezeigten schematischen Anordnung der Einrichtungen 1 können auch beliebige andere Anordnungen getroffen werden.

Die Einrichtung 1 zum Wechseln von Taststiften 8 für Meßeinrichtungen 12 ist eine Magazineinrichtung, die einen oder mehrere Wechselplätze 18 aufweist, an den zur Aufnahme von jeder Spannzange 20 ein Träger 21 angeschlossen ist. Der Träger 21 nimmt die Spannzange 20 in deren Achsenkreuz 22 auf. Zu diesem Zweck ist innerhalb der Bohrung 23 des Trägers 21 und durch die koaxiale Bohrung 24 der im Achsenkreuz gelenkig miteinander verbundenen Betätigungsarme 25 bzw. Schließarme 26 eine Zugfeder 27 eingebaut, die an ihren diametral gegenüberliegenden Enden am Träger 21 und der Spannzange 20 befestigt ist. Durch diese Bauweise wird die Spannzange nur durch die Feder 27 in axialer Richtung schwimmend gehalten. In die Bohrung 24 der Betätigungsarme 25 bzw. der Schließarme 26 ist ferner eine Kugelbüchse 28 eingesetzt, die eine leichtgängige Bewegung der Betätigungsarme 25 und der Schließarme 26 zentrisch im Achsenkreuz 22 gewährleistet. Um ein zu tiefes Abfallen der Spannzange 20 zu verhindern, befindet sich an dem Träger 21 ferner ein Anschlagbolzen 29, dessen Kopf 30 im Endanschlag an einer Axialfläche einer Ringausnehmung 31 an einem Betätigungsarm 25 anliegt.

Sowohl die Betätigungsarme 25 als auch die Schließarme 26 stehen unter der Wirkung jeweils einer Schließfeder 32 bzw. 33, die zwischen den Armen befestigt sind und die Spannzange 20 in geschlossenem Zustand halten.

Die Schließarme 26 besitzen an ihrem vorderen Ende sich diametral gegenüberliegende teilkreisförmige Backen 34 aus Stahl. Unterhalb der Backen 34 sind Auffangringe 65 angebracht, die ein Herausfallen eines in die Spannzange 20 eingesetzten Taststiftes bei möglicher Fehlbedienung oder Fehlsteuerung verhindern sollen. Auf einem Schließarm 26 ist auf der im rechten Winkel durch die Backen 34 gezogenen Mittelachse 35 ein Stift 36 axial nach oben vorstehend eingesetzt. Dieser Stift 36 greift als Indexstift in die tellerförmige Taststiftaufnahmeeinrichtung 37 in eine Radialnut 38 ein. Mit Hilfe dieses Stiftes 36 wird sichergestellt, daß ein Taststift 8 mit seiner Aufnahmeeinrichtung 37 immer in richtiger Position in der Spannzange 20 eingesetzt ist und ein Verdrehen der eingesetzten Taststiftaufnahmeeinrichtung 37 verhindert wird.

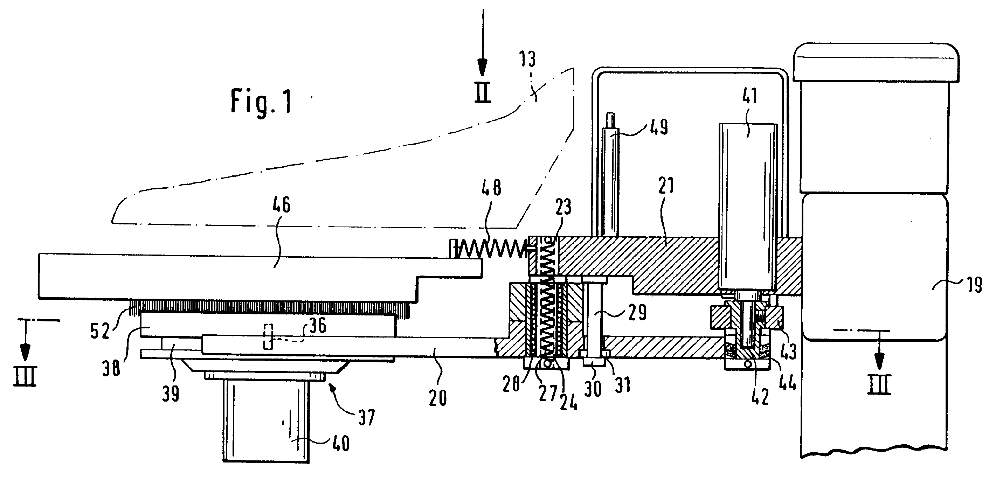

Wie aus der Figur 1 ersichtlich ist, besitzt die Taststiftaufnahmeeinrichtung 37 einen oberen Teller 38, welcher der Verbindung mit einem Tastkopf 13 dient. Die Spannzange 20 greift mit ihren Schließarmen in eine Ringnut 39 unterhalb des Tellers 38 ein. Der zylindrische Fortsatz 40 dient der Taststiftaufnahme und -halterung.

Auf dem Träger 21 ist ein Getriebemotor 41 angeordnet, dessen Antriebswelle 42 eine Kurvenscheibe 43 antreibt. Unterhalb der Kurvenscheibe befindet sich eine Rutschkupplung 44. Die Kurvenscheibe 43 befindet sich im Eingriff mit den sich gegenüberliegenden Betätigungsarmen 25 der Spannzange 20. Bei Drehung der Kurvenscheibe 43 gleitet ihre Mantelfläche an Rollen 45 an den Betätigungsarmen 25 der Spannzange 20 ab und spreizt die Betätigungsarme gegen die Kraft der Schließfeder 32 auseinander, was zu einem Öffnen der Schließarme entgegen der Schließfeder 33 führt.

Über der Spannzange 20 befindet sich ein Schutzdeckel 46, dessen Deckelfläche den Bereich der Schließarme 26 und damit die Taststiftaufnahmeeinrichtung 37 abdeckt. Der Schutzdeckel 46 ist um einen Bolzen 47 im Träger 21 schwenkbar gelagert. Das Verschwenken des Schutzdeckels 46 in die strichpunktierte Position erfolgt gegen die Kraft einer Rückholfeder 48. Durch das Verschwenken kontaktiert der Schutzdeckel 46 einen Endschalter 49, welcher seinerseits den Motor 41 aktiviert und damit schließlich die Spannzange 20 bewegt für eine Aufnahme oder für eine Abgabe eines Taststiftes 8. Um die Spannzange zu Anfang einmessen zu können, wird der Schutzdeckel 46 manuell bis in eine Endstellung verschwenkt, in welcher eine Raste 50 hinter eine Anschlagkante 51 am Träger 21 greift.

Auf der Unterseite ist der Schutzdeckel 46 mit einem Abstreifer 52 in Bürstenform ausgestattet. Der Abstreifer ist dabei ringförmig in einem Durchmesser angeordnet, der etwas größer ist als der Durchmesser der tellerförmigen Taststiftaufnahmeeinrichtung 37.

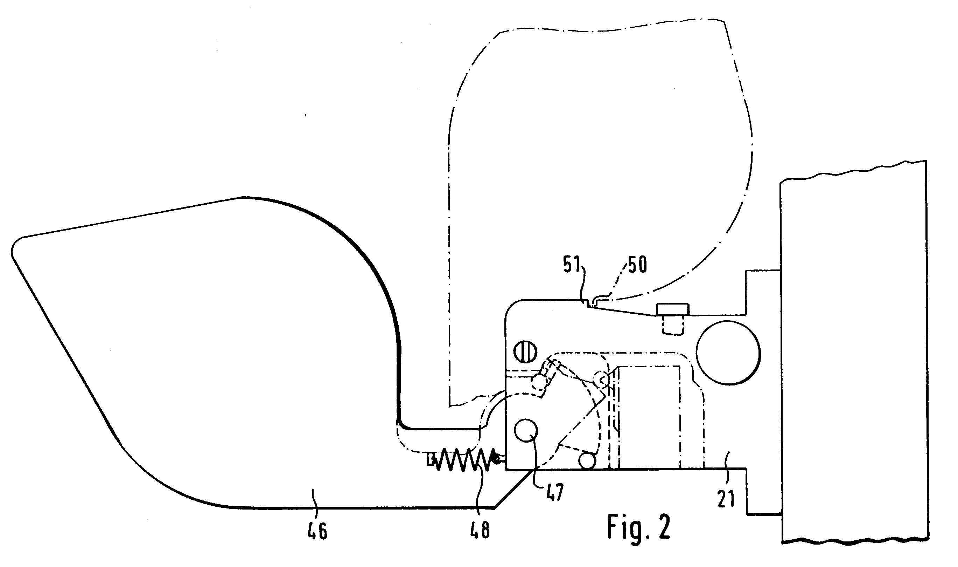

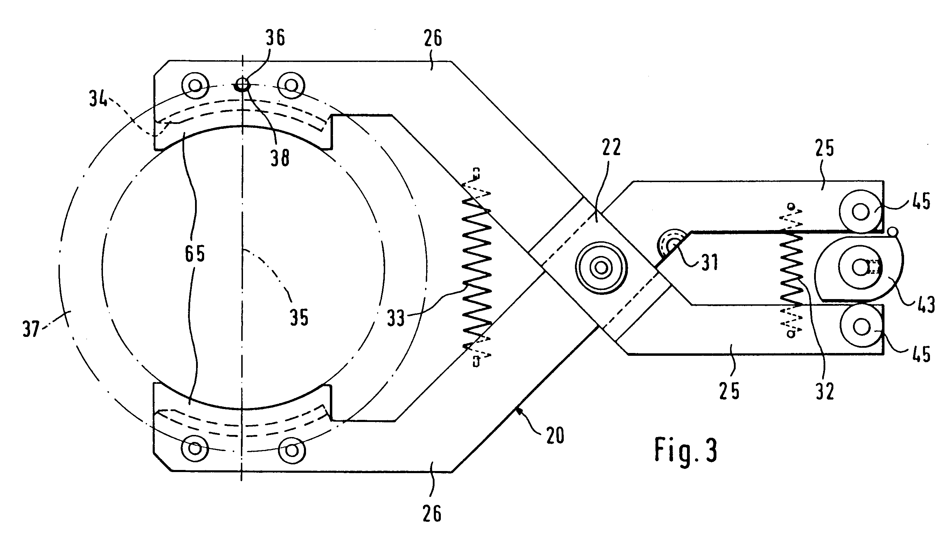

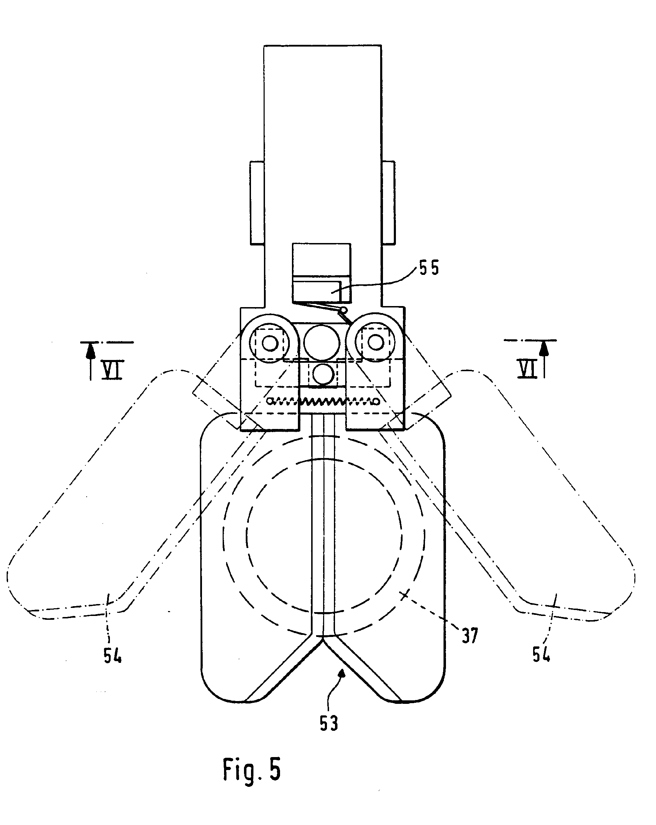

Anstelle des in Figur 2 dargestellten einteiligen Schutzdeckels 46 ist nach Figur 5 auch eine Ausführung des Schutzdeckels 53 mit zwei symmetrisch angeordneten und aus der Mitte heraus zu den Seiten verschwenkbaren Schutzdeckelhälften 54 möglich. Auch bei dieser zweigeteilten Ausführung des Schutzdeckels 53 wird bei dem Verschwenken einer Schutzdeckelhälfte 54 ein Mikroschalter 55 kontaktiert, wodurch wiederum schließlich die unterhalb des Schutzdeckels 53 angeordnete Spannzange aktiviert wird. Die Spannzange kann alternativ zu der Ausbildung nach den Figuren 1 bis 3 auch die Ausführungsform 56 gemäß der Figur 4 besitzen. In diesem Fall schließen an die Schließarme 57 mit ihren Backen 34 zwei parallel im Abstand zueinander angeordnete Betätigungsarme 58 an, die jeweils über Bolzen 59 drehbar gelagert sind. An den zu den Schließarmen 57 entgegengesetzten Enden ist an den Betätigungsarmen ein Kniehebelgelenk 60 mit den Gelenkarmen 61 und 62 angeschlossen. Dabei ist der Mittelhebel 62 an einem Hubmagneten 63 befestigt, der sich in der Ebene der Spannzange 56 nach hinten fortsetzt und dadurch den Raum über der Spannzange 56 völlig freihält. Der Hubmagnet 63 wird ebenso wie der Motor in den Beispielen nach den Figuren 1 bis 3 durch einen Mikroschalter 55 oder einen Endschalter 49 nach Aufschwenken bzw. Wegschwenken des Schutzdeckels 46 bzw. 53 aktiviert.

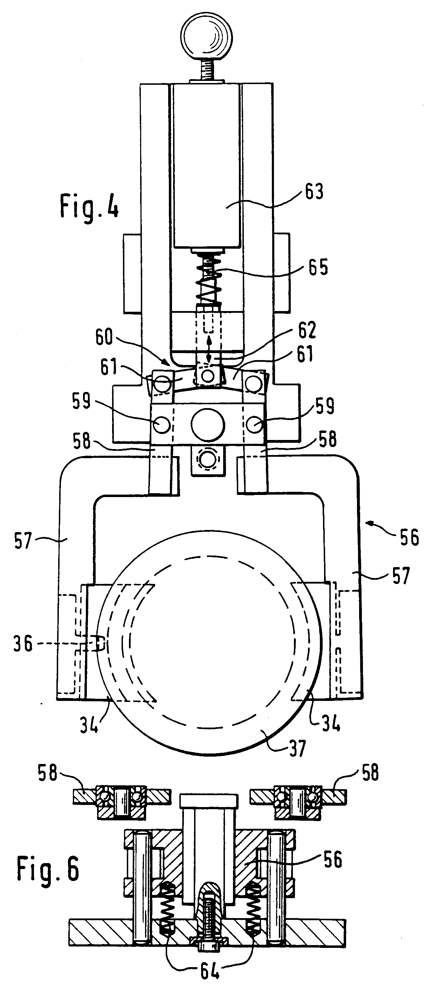

Figur 6 zeigt, daß die Spannzange 56 durch zwei vertikal wirkende Federn 64 schwimmend gelagert ist.

Der Erfindungsgegenstand besteht entsprechend der vorstehenden Beschreibung aus einer freibeweglichen, in einer Kugelführung gelagerten und mit Federkraft in der Nullage fixierten Spannzange 20 bzw. 56. Das Öffnen der Spannzange 20 erfolgt mittels eines Motors 41 mit einer Kurvenscheibe 43 und einer Rutschkupplung 44. Das Schließen der Spannzange 20 geschieht durch Federkraft.

Für das manuelle Einlegen einer Taststiftaufnahmeeinrichtung 37 wird der Schutzdeckel 46 bzw. 53 weggeschwenkt, bis er in der Endstellung der Raste 50 einrastet. In dieser Endstellung des Schutzdeckels 46 bzw. 53 wird die Spannzange 20 bzw. 56 offengehalten. Dadurch kann die Taststiftaufnahmeeinrichtung 37 zusammen mit einem Taststift 8 in die Spannzange 20 bzw. 56 eingelegt werden. Nun wird ein Sperrbolzen bis in die Mittelstellung zurückgezogen, wodurch die Spannzange zum Einmessen arretiert ist. Die Position der Taststiftaufnahmeeinrichtung 37 wird sodann eingemessen und schließlich der Sperrbolzen bis zum Endanschlag zurückgezogen. Daraufhin wird schließlich der Schutzdeckel 46 bzw. 53 über die Taststiftaufnahmeeinrichtung 37 zurückgeschwenkt.

Der automatische Wechsel eines Taststiftes geschieht dadurch, daß für das Ablegen einer Taststiftaufnahmeeinrichtung 37 mit einem Taststift 8 der Tastkopf einer Meßeinrichtung 12 CNC-gesteuert in die freie, offene Spannzange 20 bzw. 56 einfährt. Dabei wird der Schutzdeckel 46 bzw. 53 weggeschwenkt und gleichzeitig der Getriebemotor 41 oder der Hubmagnet 63 in Bereitschaft geschaltet. Ist die Wechselposition erreicht worden, so dreht der Getriebemotor 41 zeitgesteuert die Kurvenscheibe 43. Die Spannzange 20 bzw. 56 schließt sich und paßt sich der Lage der tellerförmigen Taststiftaufnahmeeinrichtung 37 an. Erst wenn die Spannzange 20 bzw. 56 vollständig geschlossen ist, wird ein Haltemagnet am Tastkopf 13 deaktiviert, so daß der Tastkopf 13 der Meßeinrichtung 12 vom Magazin wegfahren kann und der Schutzdeckel 46 bzw. 53 mit dem Abstreifer 52 über die tellerförmige Taststiftaufnahmeeinrichtung 37 schwenkt.

Um eine Taststiftaufnahmeeinrichtung mit einem Taststift 8 aufzunehmen, fährt der Tastkopf 13 CNC-gesteuert über die aufzunehmende tellerförmige Taststiftaufnahmeeinrichtung 37, wobei der Schutzdeckel 46 bzw. 43 weggeschwenkt wird und das dabei erzeugte Signal den Haltemagnet am Tastkopf deaktiviert und den Motor 41 bzw. den Hubmagneten 63 in Bereitschaft schaltet. Die Spannzange 20 bzw. 56 paßt sich der Lage der Meßtasteraufnahme an. Nach Erreichen der Wechselposition in der Magazineinrichtung wird der Haltemagnet des Tastkopfes 13 aktiviert, die Spannzange 20 bzw. 56 öffnet sich und der Tastkopf 13 fährt mit dem aufgenommenen Taststift 8 weg, so daß der Schutzdeckel 46 bzw. 53 wieder über die nun leere Spannzange 20 bzw. 56 schwenken kann.

Die einzelnen Spannzangen können in beliegendem Abstand an einer Tragschiene oder Halterung 19, deren Maximallänge dem maximalen Meßweg einer Meßmaschine entsprechen kann, angeschraubt werden. Die Lage der Tragschienen auf der Meßmaschine 12 ist beliebig, wird jedoch zweckmäßigerweise so gewählt, daß die Verbindungslinie der Mittelpunkte der Spannzangen 20 auf der Außenlinie der Meßbereichsebene in der horizontalen X-Y-Richtung liegt. Ferner ist darauf zu achten, daß der Meßbereich durch Tasterverlängerungen so wenig wie möglich eingeschränkt wird. Die Lage der Taststiftkombinationen zum Meßobjekt soll dabei so gewählt werden, daß die Wechselzeiten so kurz wie möglich bleiben,

## Patentansprüche

1. Einrichtung (1) zum Wechseln von Taststiften (8) für Meßeinrichtungen (12), mit einer Taststiftaufnahmeeinrichtung (37), die der Verbindung der Taststifte mit dem Tastkopf (13) der Meßeinrichtungen (12) dient und zusammen mit einem angeschlossenen Taststift (8) in eine Magazineinrichtung aus zumindest einem Wechselplatz (18) und mit verschwenkbarem oder verschiebbarem Schutzdeckel (46) ablegbar ist,
dadurch gekennzeichnet,
daß jeder Wechselplatz (18) der Magazineinrichtung (1) eine mit dem Schutzdeckel (46,53) derart in Kontakt stehende Spannzange (20,56) aufweist, daß mit der Schutzdeckelöffnung der Programmzyklus des Wechselns nur für den programmgesteuert angewählten Wechselplatz (18) aktiviert wird, wobei jede Spannzange (20,56) ortsfest im Bewegungsbereich des Tastkopfes (13) der Meßeinrichtung (12) in einem Lagerelement mit freier Beweglichkeit angeordnet und durch Anschluß an elektrische Energie programmgesteuert bewegbar ist.

2. Einrichtung nach Anspruch 1,
dadurch gekennzeichnet,
daß die Spannzange (20) gegen die Kraft zumindest einer Schließfeder (32,33) in die Öffnungsstellung bewegbar ist.

3. Einrichtung nach den Ansprüchen 1 und 2,
dadurch gekennzeichnet,
daß zwischen die Betätigungsarme (25) der Spannzange (20,56) eine Kurvenscheibe (43) drehbar eingesetzt ist, die von einem Elektromotor (41) programmgesteuert antreibbar ist.

4. Einrichtung nach den Ansprüchen 1 und 2,
dadurch gekennzeichnet,
daß die Betätigungsarme (58) der Spannzange (56) durch einen Hubmagneten (63) entgegen der Kraft zumindest einer Schließfeder (65) bewegbar sind, wobei der Hubmagnet (63) auf eine zwischen die Betätigungsarme (58) angeordnete Kniehebel-Gelenkanordnung (60) wirkt.

5. Einrichtung nach den Ansprüchen 1 bis 4,
dadurch gekennzeichnet,
daß an einem der beiden Schließarme (26,57) der Spannzange (20,56) ein radial oder axial vorstehender Stift (36) fest eingesetzt ist, der bei Aufnahme eines Taststiftes (8) in eine radiale Nut (38) der Taststiftaufnahmeeinrichtung (37) fixierend eingreift.

6. Einrichtung nach den Ansprüchen 1 bis 5,
dadurch gekennzeichnet,
daß die Spannzangen (20,56) mit ihren Schließarmen (26,57) wahlweise zur horizontalen oder vertikalen Aufnahme der Taststiftaufnahmeeinrichtung vorgesehen sind.

7. Einrichtung nach einem oder mehreren der vorgenannten Ansprüche,
dadurch gekennzeichnet,
daß die Spannzange (20,56) in horizontaler und in vertikaler Richtung schwimmend mittels Federkraft gelagert ist.

8. Einrichtung nach einem oder mehreren der vorgenannten Ansprüche,
dadurch gekennzeichnet,
daß der Schutzdeckel (46,53) einen Mikroschalter bzw. Endschalter (49,55) bei der Bewegung in die geöffnete Endstellung kontaktiert, die die Spannzange (20,56) über elektrische Antriebseinrichtung aktiviert.

9. Einrichtung nach einem oder mehreren der vorgenannten Ansprüche,
dadurch gekennzeichnet,
daß der Schutzdeckel (46,53) wahlweise einteilig oder mehrteilig ausgebildet ist und im Falle der mehrteiligen Ausbildung symmetrisch angeordnete Schutzdeckelteile (54) besitzt, die eine im wesentlichen symmetrische Bewegung vollziehen.

10. Einrichtung nach den Ansprüchen 1 bis 9,
dadurch gekennzeichnet,
daß an der Unterseite des Schutzdeckels (46,53) ein bürstenförmiger Abstreifer (52) vorgesehen ist.

11. Einrichtung nach den Ansprüchen 1 bis 7,
dadurch gekennzeichnet,
daß unter den Haltebacken (34) der Schließarme (26,57) der Spannzange (20,56) Halteringe für die Taststiftaufnahmeeinrichtung (37) vorgesehen sind.

12. Einrichtung nach einem oder mehreren der vorgenannten Ansprüche,
dadurch gekennzeichnet,
daß die Magazineinrichtung (1) innerhalb des Bewegungsbereiches des Tastkopfes (13) an beliebiger Stelle, vorzugsweise in der Y-X-Verfahrebene, angeordnet ist.

13. Einrichtung nach einem oder mehreren der vorgenannten Ansprüche,
dadurch gekennzeichnet,
daß die Magazineinrichtung (1) aus mehreren, räumlich voneinander getrennten Teilmagazinen mit Wechselplätzen gebildet ist.

## Claims

1. Device (1) for changing sensor pins (8) used for measuring devices (12), having a sensor pin receiving device (37) which serves to connect the sensor pins to the sensor head (13) of the measuring devices (12) and, together with a connected sensor pin (8), can be deposited into a magazine device comprising at least one changing point (18) and having a pivotal or slidable protective cover (46), characterized in that each changing point (18) of the magazine device (1) has a pair of clamping tongs (20, 56) which is in contact with the protective cover (46, 53) such that on opening the protective cover the program cycle of changing is only activated for the changing point (18) which is selected by program control, each pair of clamping tongs (20, 56) being arranged fixed in the region of movement of the sensor head (13) of the measuring device (12) in a freely movable bearing element and being movable by program control by connection to an electrical energy source.

2. Device according to Claim 1, characterized in that the pair of clamping tongs (20) is movable into the opening position in opposition to the force of at least one closing spring (32, 33).

3. Device according to Claims 1 and 2, characterized in that there is rotatably inserted between the actuating arms (25) of the pair of clamping tongs (20, 56) a cam plate (43) which is drivable by program control by an electric motor (41).

4. Device according to Claims 1 and 2, characterized in that the actuating arms (58) of the pair of clamping tongs (56) are movable by means of a solenoid (63) in opposition to the force of at least one closing spring (65), the solenoid (63) acting on an articulated toggle lever arrangement (60) which is arranged between the actuating arms (58).

5. Device according to Claims 1 to 4, characterized in that there is securely inserted in one of the two closing arms (26, 57) of the pair of clamping tongs (20, 56) a radially or axially projecting pin (36) which, on receiving a sensor pin (8), engages fixedly in a radial groove (38) in the sensor pin receiving device (37).

6. Device according to Claims 1 to 5, characterized in that the pairs of clamping tongs (20, 56) with their closing arms (26, 57) are provided optionally for horizontal or vertical receiving of the sensor pin receiving device.

7. Device according to one or more of the preceding claims, characterized in that the pair of clamping tongs (20, 56) is mounted by means of spring force in floating manner in the horizontal and in the vertical direction.

8. Device according to one or more of the preceding claims, characterized in that the protective cover (46, 53) comes into contact with a microswitch or limit position switch (49, 55) as it moves into the opened end position which activates the pair of clamping tongs (20, 56) by way of an electrical drive device.

9. Device according to one or more of the preceding claims, characterized in that the protective cover (46, 53) is optionally constructed in one or more parts and in the case of multi-part construction has symmetrically arranged protective cover parts (54) which perform a substantially symmetrical movement.

10. Device according to Claims 1 to 9, characterized in that a brush-shaped stripper (52) is provided on the underside of the protective cover (46, 53).

11. Device according to Claims 1 to 7, characterized in that holding rings for the sensor pin receiving device (37) are provided beneath the holding jaws (34) of the closing arms (26, 57) of the pair of clamping tongs (20, 56).

12. Device according to one or more of the preceding claims, characterized in that the magazine device (1) is arranged at any point within the region of movement of the sensor head (13), preferably in the Y or X traversing plane.

13. Device according to one or more of the preceding claims, characterized in that the magazine device (1) is formed from a plurality of spatially mutually separate part magazines with changing points.

## Revendications

1. Dispositif pour changer des tiges de palpage (8) pour dispositifs de mesure (12), avec un dispositif de logement de tige de palpage (37), servant à relier les tiges de palpage à la tête de palpage (13) des dispositifs de mesure (12) et susceptible d'être déposé, avec une tige de palpage (8) raccordée, dans un dispositif magasin, composé d'au moins un emplacement de changement (18), et avec un couvercle de protection (46), susceptible de pivoter ou de se déplacer, caractérisé en ce que chaque emplacement de changement (18) du dispositif magasin (1) présente une pince de serrage (20,56), placée en contact avec le couvercle de protection (46,53), de telle façon qu'avec l'ouverture de couvercle de protection la cycle de programme de changement ne soit activé que pour l'emplacement de changement (18) ayant été sélectionné sous la commande du programme, chaque pince de serrage (20,56) étant disposée localement fixe dans la zone de déplacement de la tête de palpage (13) du dispositif de mesure (12), dans un élément de palier à mobilité libre et susceptible de se déplacer, sous la commande d'un programme, par raccordement à une énergie électrique..

2. Dispositif selon la revendication 1, caractérisé en ce que la pince de serrage (20) est déplaçable en position d'ouverture à l'encontre de la force d'au moins un ressort de fermeture (32,3)..

3. Dispositif selon les revendications 1 et 2, caractérisé en ce qu'une disque de came (43) est inséré, tournant, entre les bras d'actionnement (25) de la pince de serrage (20,56), en étant susceptible d'être entraîné, sous la commande d'un programme, par un moteur électrique (41).

4. Dispositif selon les revendications 1 et 2, caractérisé en ce que les bras d'actionnement (58) de la pince de serrage (56) sont déplaçables au moyen d'un aimant de levage (63), à l'encontre de la force d'au moins un ressort de fermeture (65), l'aimant de levage (63) agissant sur un agencement à articulation à genouillère (60) disposé entre les bras d'actionnement (58).

5. Dispositif selon l'une des revendications 1 à 4, caractérisé en ce que sur l'un des deux bras de fermeture (26,57) de la pince de serrage (20,56) est insérée rigidement une tige (36), faisant saillie radialement ou axialement, s'engageant en produisant un blocage, lorsqu'une tige de palpage (8) s'introduit dans une gorge radiale (38) du dispositif de logement de tige de palpage (37).

6. Dispositif selon l'une des revendications 1 à 5, caractérisé en ce que les pinces de serrage (20,56) sont prévues avec leurs bras de fermeture (26,57) au choix pour recevoir horizontalement ou verticalement le dispositif de logement de tige de palpage.

7. Dispositif selon l'une ou plusieurs des revendications précédentes, caractérisé en ce que la pince de serrage (20,56) est montée flottante, en direction horizontale et en direction verticale, au moyen d'une force élastique.

8. Dispositif selon l'une ou plusieurs des revendications précédentes, caractérisé en ce que le couvercle de protection (46,53) établit un contact avec un micro-interrupteur, ou un interrupteur de fin de course (49,55), lors du déplacement dans la position finale d'ouverture qui active la pince de serrage (20,56), par l'intermédiaire d'un dispositif d'entraînement électrique.

9. Dispositif selon l'une ou plusieurs des revendications précédentes, caractérisé en ce que 1 couvercle de protection (46,53) est réalisé au choix en une ou plusieurs parties et comporte, dans le cas de la réalisation en plusieurs parties, des parties de couvercles de protection (54) symétriques, effectuant un mouvement sensiblement symétrique.

10. Dispositif selon les revendications 1 à 9, caractérisé en ce qu'un racleur (52) se présentant sous la forme de brosses est prévu en face inférieure du couvercle de protection (46,53).

11. Dispositif selon les revendications 1 à 7, caractérisé en ce que des bagues de maintien, destinées au dispositif de logement de tige de palpage (37), sont prévues sous les mâchoires de maintien (34) des bras de fermeture (26,57) de la pince de serrage (20,56).

12. Dispositif selon l'une ou plusieurs des revendications précédentes, caractérisé en ce que le dispositif magasin (1) est disposé à l'intérieur de la zone de déplacement de la tête de palpage (13), en un endroit quelconque souhaité, de préférence dans le plan de déplacement des X-Y.

13. Dispositif selon l'une ou plusieurs des revendications précédentes, caractérisé en ce que le dispositif magasin (1) est formé de plusieurs magasins partiels, spatialement séparés les uns des autres, avec des emplacements de changement.
